# EUROPEAN PATENT SPECIFICATION

(11) **EP 1 462 628 B1**
(45) Date of publication and mention of the grant of the patent: **26.07.2006**
(21) Application number: 04007285.2
(22) Date of filing: 26.03.2004
(51) Int. Cl.: F02B 37/22, F01D 17/14

(54) **Variable volume turbocharger**
Turbolader mit veränderbarem Volumen
Turbocompresseur avec volume variable

(30) Priority: 28.03.2003 JP 2003092880
(43) Date of publication of application: 29.09.2004
(73) Proprietor: AISIN SEIKI KABUSHIKI KAISHA, Kariya-shi, Aichi-ken, 448-8650 (JP)
(72) Inventor: Ishihara, Hiromitsu, Okazaki-shi Aichi-ken (JP)
(74) Representative: Kramer - Barske - Schmidtchen

(56) References cited:
- DE-A- 10 112 552
- US-A- 6 073 447
- PATENT ABSTRACTS OF JAPAN vol. 2002, no. 09, 4 September 2002 (2002-09-04) & JP 2002 155754 A (AISIN SEIKI CO LTD), 31 May 2002 (2002-05-31)

## Description

### FIELD OF THE INVENTION

The present invention relates to a variable volume turbocharger. More particularly, the present invention pertains to a variable volume turbocharger for supercharging an internal combustion engine.

### BACKGROUND OF THE INVENTION

Known variable volume turbochargers include a turbine housing including an internal peripheral scroll and an external peripheral scroll, and a vane (i.e., a division wall) for defining the internal peripheral scroll and the external peripheral scroll in order to ensure the performance at a low speed region and at a middle and a high speed region. With the known variable volume turbochargers, the division wall is unitarily formed with the turbine housing by casting. Notwithstanding, because the division wall is formed by casting, guiding function for flowing the exhaust of the division wall is limited when merging the flow of the exhaust gas in the internal and the external scrolls smoothly in order to ensure the performance at the middle speed region and at a high speed region. In addition, with the division wall formed by casting, the variation of the performance characteristics is increased.

In the meantime, as described in Japanese Patent Laid-Open Publication No. H10-8977, because the temperature of the exhaust gas assumes high values by direct injection of a gasoline engine and by the high output of the diesel engine, the concentration of the stress due to the thermal expansion in accordance with the temperature increase of the division wall likely generate a crack to decline the reliability.

A need thus exists for a variable volume turbocharger for an internal combustion engine which reduces variations of the performance characteristics of the variable volume turbocharger and increases the reliability of a division wall.

DE 101 12 552 A1, from which preamble of appended claim 1 starts, discloses a turbocharger with a division wall which is integrally formed with the turbine housing. The turbine housing includes the exhaust inlet, the exhaust outlet and the scroll portion, which is divided by the division wall into an internal scroll portion and an external scroll portion.

JP-2002155754 discloses a turbocharger with a turbine housing consisting of an outer part and an inner part. The outer part includes an exhaust inlet and a scroll part. The inner part includes an exhaust outlet. A division wall may be integrally formed with the inner part or the outer part of the turbine housing to divide the scroll part into an internal scroll portion and an external scroll portion. Both, the inner part and the outer part are parts of the turbine housing. Furthermore, the inner part includes the exhaust outlet and the outer part includes the exhaust inlet.

### SUMMARY OF THE INVENTION

It is an object of the invention to provide a variable volume turbocharger, which can be easily manufactured and exhibits a good performance.

A solution of this object is achieved by a variable volume turbocharger according to claim 1.

The inventive variable volume turbocharger is provided with a cover member at an opening end surface of the turbine housing, which defines both, the internal scroll portion and the external scroll portion and is integrally formed with the division wall. The turbine housing includes the exhaust inlet and the exhaust outlet and also defines the scroll portion. The turbine housing is not formed with the division wall.

By forming the division wall at the cover member, the division wall can be formed separated from the turbine housing. Thus, the division wall may be formed by metal injection molding, lost wax forming, mechanical machining or the like, with a high precision. Accordingly, the reliability for the thermal expansion of the division wall is increased, the variations of the performance are declined and the performance of the turbocharger per se is increased. Furthermore, the manufacturing of the turbine housing, which does not include the division wall as a part, which has to be manufactured with high precision, is simplified.

Appended sub-claims are directed towards advantageous embodiments of the inventive variable volume turbocharger.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 shows a cross-sectional view of a variable volume turbocharger in an axial direction according to an embodiment of the present invention.
Fig. 2 shows a front view of a turbine taken on line II-II of Fig. 1.
Fig. 3 shows a front view showing an insert turbine serving as a cover member according to the embodiment of the present invention.
Fig. 4 shows a lateral view of the insert turbine shown in Fig. 3.
Fig. 5 shows a cross-sectional view of a variable volume turbocharger including a groove for accommodating a tip end portion of a division member at a turbine housing according to the embodiment of the present invention.

### DETAILED DESCRIPTION OF THE INVENTION

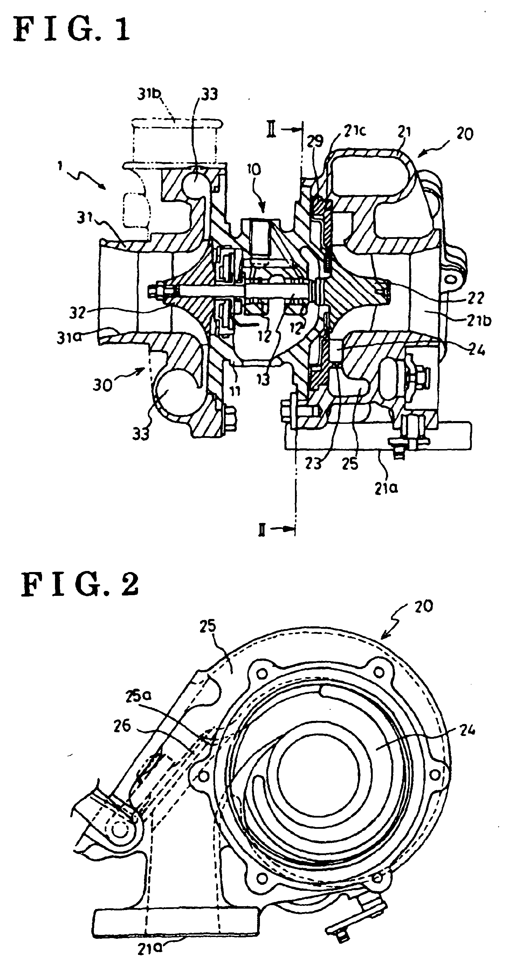

Embodiments of the present invention will be explained with reference to the illustrations of the drawing figures as follows. A variable volume turbocharger 1 shown in Figs. 1-2 includes a turbine 20 and a compressor 30 connected each other via a connecting portion 10. The turbine 20 includes a turbine housing 21 and a turbine rotor 22 positioned in the turbine housing 21. The compressor 30 includes a compressor housing 31 and a compressor rotor 32.

The connecting portion 10 includes a bearing housing 11 and a shaft 13 rotatably supported in the bearing housing 11 via a bearing 12. Ends of the shaft 13 are projected from the bearing housing 11. A first end side of the shaft 13 is exposed to the inside of the turbine housing 21 of the turbine 20. A second end of the shaft 13 is exposed to the inside of the compressor housing 31 of the compressor 30. The turbine rotor 22 of the turbine 20 is unitarily rotatably secured to the first end of the shaft 13. The compressor rotor 32 of the compressor 30 is unitarily rotatably assembled to the second end of the shaft 13.

The turbine housing 21 is attached at a first side of the bearing housing 11 of the connecting portion 10. The turbine rotor 22 is unitarily rotatably secured to the first end of the shaft 13 penetrating the first side of the bearing housing 11. The turbine rotor 22 is positioned at an exhaust passage (serving as a passage) formed in the turbine housing 21.

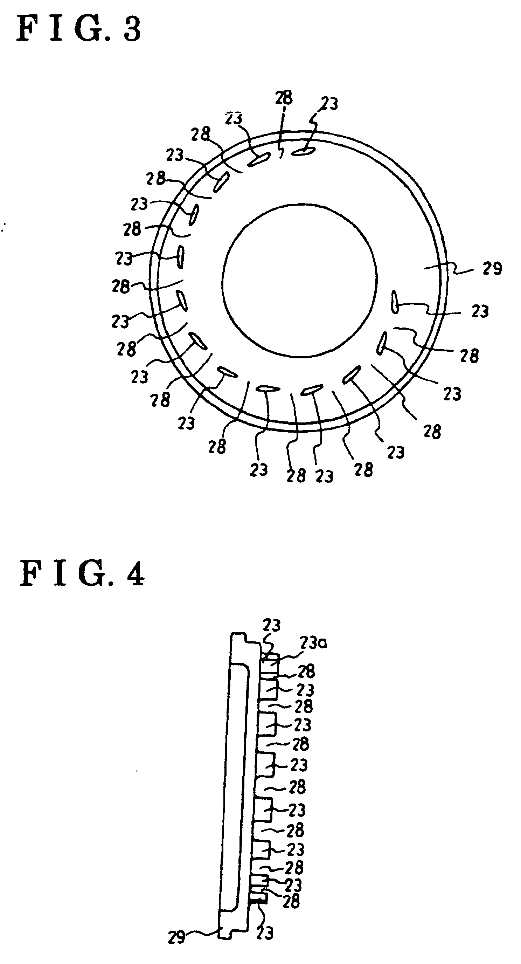

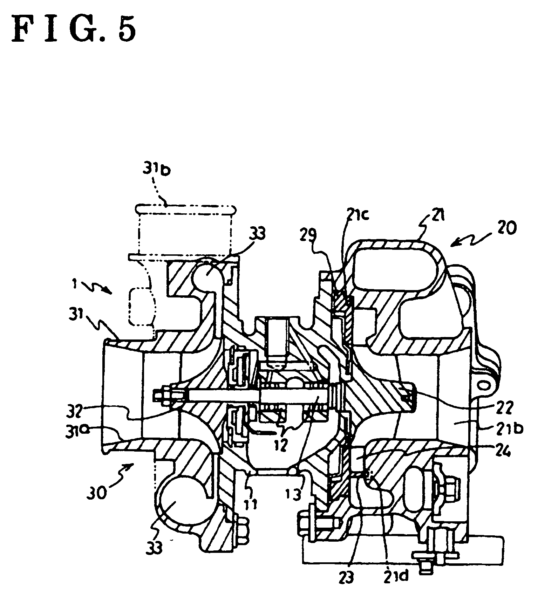

The turbine housing 21 includes the turbine rotor 22, an exhaust inlet 21a, and an exhaust outlet 21b. The exhaust passage is formed between the exhaust inlet 21a and the exhaust outlet 21b. The turbine housing 21 includes a scroll portion between the turbine rotor 22 and the exhaust inlet 21a. The cross-sectional area of the scroll portion is gradually reduced from the turbine rotor 22 side to the exhaust inlet 21a side. An insert turbine 29 serving as a cover member for defining the scroll portion is provided at the turbine housing 21. As shown in Figs. 3-4, the insert turbine 29 divides the scroll portion into an internal peripheral scroll (serving as a scroll portion) 24 and an external scroll portion (serving as a scroll portion) 25 in a radial direction. The insert turbine 29 further includes division walls 23 having plural communication bores (slits) 28 for regulating the flow speed of the exhaust gas flown at the internal scroll 24 by flowing the exhaust gas flown at the external peripheral scroll 25 into the internal peripheral scroll 24. The insert turbine 29 includes an approximately stepped disc configuration. An external peripheral portion of the insert turbine 29 is fitted into a recess portion 21c provided at the turbine housing 21 to be fixed. The communication bore 28 is configured to have a gentle slope configuration at the upstream side and to have a steep slope configuration at the downstream side and is directed to an axial center of the turbine rotor 22 with a predetermined slope angle. A tip end portion 23a of the division wall 23 faces an internal peripheral surface of the scroll portion via a predetermined clearance. As shown in Fig. 5, the tip end portion 23a of the division wall 23 may be accommodated in a groove 21d formed at the turbine housing 21.

By forming the division wall 23 unitarily with the insert turbine 29, the division wall 23 can be formed with high precision by metal injection molding, lost wax forming, and mechanical processing forming, or the like.

A control valve 26 is provided at the exhaust inlet 21 a side of the turbine housing 21 at the turbine 20. The control valve 26 controls an opening degree of an inflow opening portion 25a of the external peripheral scroll 25 and is seated at a valve seat portion positioned at the tip end portion 23a of the division wall 23. The control valve 26 closes the inflow opening portion 25a of the external scroll portion 25 at a state shown in Fig. 2, and is controlled to be open and closed in accordance with the engine rotational speed..

The compressor 30 includes the compressor housing 31 and the compressor rotor 32 positioned in the compressor housing 31. The compressor housing 31 is attached at the second end of the bearing housing 11 of the connecting portion 10. The compressor rotor 32 is unitarily rotatably assembled to the second end of the shaft 13 penetrating a second side of the bearing housing 11 and is positioned at an intake passage formed in the compressor housing 31.

The compressor housing 31 includes a compressor introducing port 31a and a compressor exhaust port 31b. A circular scroll portion 33 is formed along an external periphery of the compressor housing 31 between the compressor introducing port 31a and the compressor exhaust port 31b. The scroll portion 33 forms a compressor passage. The scroll portion 33 is configured to be gradually smaller in dimension from a position adjacent to the compressor exhaust port 31b to the compressor introducing port 31a.

The operation of the variable volume turbocharger 1 is explained as follows.

The turbocharger 1 is operated by introducing the exhaust gas from the engine to the exhaust passage via the exhaust inlet 21a of the turbine housing 21. The compressor portion 30 generates a predetermined supercharging pressure to supply the supercharging pressure to an intake port of the engine.

With the turbocharger 1 at the low speed region of the engine where the exhaust flow amount is small, the inflow opening portion 25a of the scroll portion 25 is closed by the control valve 26 and the exhaust gas introduced via the exhaust inlet 21 a of the turbine housing 21 flows into the internal scroll portion 24. The exhaust gas flown in the internal scroll portion 24 contacts the turbine rotor 22 from a tangential direction of the turbine rotor 22 to effectively rotate the turbine rotor 22. Thereafter, the exhaust gas is exhausted to an exhaust pipe via the exhaust outlet 21b.

Meanwhile, the shaft 13 rotates by the rotation of the turbine rotor 22 to rotate the compressor rotor 32. Thus, the atmosphere is introduced from the compressor introducing port 31a of the compressor housing 31 to have the predetermined supercharging pressure by the compression by the compressor rotor 32 to be introduced to the intake port of the engine as the intake air with high density via the compressor exhaust port 31b.

Accordingly, the variable volume turbocharger 1 serves as the turbocharger with small volume having the volume of the internal scroll portion 24, which efficiently rotates the turbine rotor 22 with less exhaust gas.

In the meantime, at the middle speed region and at the high speed region of the engine where the exhaust flow amount is large, the inflow opening portion 25a of the external periphery scroll portion 25 is opened in accordance with the engine state by the operation of the control valve 26. In this case, the exhaust gas introduced via the exhaust inlet 21a of the turbine housing 21 flows into the internal scroll portion 24 and the external scroll portion 25 and the exhaust gas flown into the internal scroll portion 24 rotates the turbine rotor 22 to be exhausted to the exhaust pipe via the exhaust outlet 21b.

Meanwhile, the exhaust gas flown into the external scroll portion 25 flows into the internal scroll portion 24 via communication bores 28 at the division wall 23. In this case, the flowing direction of the exhaust gas to the internal scroll portion 24 corresponds to the direction along the directional direction of the communication bores 28, i.e., the direction towards the axial center of the turbine rotor 22. Although the flow of the exhaust gas flown in the internal scroll portion 24 contacts the turbine rotor 22 from the tangential direction of the turbine rotor 22, the direction of the exhaust gas flown in the internal scroll portion 24 can be changed to the flow towards the rotational center of the turbine rotor 22 by the flow of the exhaust gas flown into the internal scroll portion 24 from the external scroll portion 25. Further, the flow speed of the exhaust gas contacting the turbine rotor 22 is declined. Accordingly, the rotation of the turbine rotor 22 is restrained to prevent the excessive rotation of the compressor rotor 32 so that the turbocharger 1 is controlled to have the predetermined supercharging pressure even at the regions including the large exhaust amount at the middle speed region and the high speed region of the engine.

According to the embodiment of the present invention, the cover member is provided at an opening end surface of the turbine housing to define both the external scroll portion and the internal scroll portion and the cover member includes neither the exhaust inlet nor the exhaust outlet and is formed with the division wall. By forming the division wall at the cover member, the division wall is allowed to be formed separated from the turbine housing. Thus, the division wall is formed by the metal injection molding, lost wax forming, and the mechanical machining, or the like, corresponding to the forming method with high precision. Accordingly, the reliability for the thermal expansion of the division wall is increased, the variations of the performance are declined, and the performance of the turbocharger per se is increased.

Furthermore, by forming the groove for accommodating the tip end of the division wall at the turbine housing, the exhaust gas passes through from the external scroll portion to the internal scroll portion via the communication bore, which increases the turbine efficiency.

The principles, preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A variable volume turbocharger comprising:
a shaft (13);
a turbine rotor (22) fixed at an end of the shaft (13);
a turbine housing (21) accommodating the turbine rotor (22), the turbine housing (21) including an exhaust inlet (21a), an exhaust outlet (21b) and a scroll portion (24, 25) including a cross-sectional area gradually reduced from said turbine rotor side to said exhaust inlet side;
a division wall (23) for dividing the scroll portion (24, 25) into an internal scroll portion (24) and an external scroll portion (25) and for controlling a flow speed of the exhaust gas flown in the internal scroll portion(24) by introducing the exhaust gas flown in the external scroll portion (25) to the internal scroll portion (24);
a control valve (26) opening and closing an inflow opening portion (25a) provided at the exhaust inlet side of the external scroll portion (25) for controlling the exhaust flow amount to the scroll portion (24, 25);
**characterized by**
a cover member (29) provided at an opening end surface of the turbine housing (21) for defining both the internal scroll portion (24) and the external scroll portion (25), the cover member (29) being formed with the division wall (23) and including neither the exhaust inlet (21a) nor the exhaust outlet (21b).

2. The variable volume turbocharger according to claim 1, **characterized in that**
a groove (21d) is formed at the turbine housing (21) for accommodating a tip end portion (23a) of the division wall (23).

3. The variable volume turbocharger according to claim 1 or 2, **characterized in that** the cover member (29) includes an approximately stepped disc configuration and an external peripheral portion of the cover member (29) is fitted into a recess portion (21c) provided at the turbine housing (21) to be fixed.

4. The variable volume turbocharger according to any of claims 1 to 3, **characterized in that** the cover member (29) is formed by metal injection molding.

5. The variable volume turbocharger according to any of claims 1 to 3, **characterized in that** the cover member (29) is formed by lost wax forming.

6. The variable volume turbocharger according to any of claims 1 to 5, **characterized in that** the cover member (29) has a stepped disc configuration and an external portion of the cover member (29) is fixed to the turbine housing (21).

## Patentansprüche

1. Turbolader mit veränderbarem Volumen, enthaltend:
eine Welle (13);
einen an einem Ende der Welle (13) befestigten Turbinenrotor (22);
ein den Turbinenrotor (22) aufnehmendes Turbinengehäuse (21), das einen Abgaseinlass (2 1 a), einen Abgasauslass (21b) und einen Schneckenbereich (24, 25) mit einer von der Turbinenrotorseite zu der Abgaseinlassseite allmählich abnehmender Querschnittsfläche enthält; eine Teilerwand (23) zum Teilen des Schneckenbereiches (24, 25) in einen inneren Scheckenbereich (24) und einen äußeren Schneckenbereich (25) und zum Steuern einer Strömungsgeschwindigkeit des in den inneren Schneckenbereich (24) geströmten Abgases durch Einleiten des in den äußeren Schneckenbereich (25) geströmten Abgases in den inneren Schneckenbereich (24);
ein Steuerventil (26), das einen Einströmungsöffnungsbereich (25a), der an der Abgaseinlassseite des äußeren Schneckenbereiches (25) vorgesehen ist, öffnet und schließt, um die Abgasströmungsmenge zu dem Schneckenbereich (24, 25) zu steuern;
**gekennzeichnet durch**
ein Abdeckteil (29), das an einer Öffnungsendseite des Turbinengehäuses (21) zum Begrenzen sowohl des inneren Schneckenbereiches (24) als auch des äußeren Schneckenbereiches (25) vorgesehen ist und mit einer Teilerwand (23) ausgebildet ist und weder den Abgaseinlass (2 1 a) noch den Abgasauslass (21b) enthält.

2. Turbolader nach Anspruch 1, **dadurch gekennzeichnet, dass** an dem Turbinengehäuse (21) eine Nut (21d) zur Aufnahme eines äußeren Endbereiches (23a) der Teilerwand (23) ausgebildet ist.

3. Turbolader nach Anspruch 1 oder 2, **dadurch gekennzeichnet, dass** das Abdeckbauteil (29) eine näherungsweise abgestufte Scheibenkonfiguration enthält und ein äußerer Umfangsbereich des Abdeckbauteils (29) zur Befestigung in einen Aussparungsbereich (21c) eingesetzt ist, der an dem Turbinengehäuse (21) vorgesehen ist.

4. Turbolader nach einem der Ansprüche 1 bis 3, **dadurch gekennzeichnet, dass** das Abdeckbauteil (29) durch Metallspritzformen hergestellt ist.

5. Turbolader nach einem der Ansprüche 1 bis 3, **dadurch gekennzeichnet, dass** das Abdeckbauteil (29) durch ein Wachsausschmelzverfahren hergestellt ist.

6. Turbolader nach einem der Ansprüche 1 bis 5, **dadurch gekennzeichnet, dass** das Abdeckbauteil (29) eine abgestufte Scheibenkonfiguration aufweist und ein äußerer Bereich des Abdeckbauteils (29) an dem Turbinengehäuse (21) befestigt ist.

## Revendications

1. Turbocompresseur à volume variable comprenant :
un arbre (13) ;
un rotor de turbine (22) fixé à une extrémité de l'arbre (13) ;
un logement de turbine (21) recevant le rotor de turbine (22), le logement de turbine (21) incluant une entrée des gaz d'échappement (21a), une sortie des gaz d'échappement (21b) et une partie de volute (24, 25) incluant une surface en section transversale réduite progressivement depuis ledit côté rotor de turbine au dit côté entrée des gaz d'échappement ;
une paroi de séparation (23) pour diviser la partie de volute (24, 25) en une partie de volute interne (24) et une partie de volute externe (25) et pour commander une vitesse d'écoulement des gaz d'échappement mis à s'écouler dans la partie de volute interne (24) en introduisant les gaz d'échappement mis à s'écouler dans la partie de volute externe (25) vers la partie de volute interne (24) ;
une soupape de commande (26) ouvrant et fermant une partie d'ouverture d'écoulement d'entrée (25a) disposée au niveau du côté entrée des gaz d'échappement de la partie de volute externe (25) pour commander la quantité d'écoulement des gaz d'échappement vers la partie de volute (24, 25) ;
**caractérisé par**
un élément de couvercle (29) disposé au niveau d'une surface d'extrémité d'ouverture du logement de turbine (21) pour définir à la fois la partie de volute interne (24) et la partie de volute externe (25), l'élément de couvercle (29) étant formé avec la paroi de séparation (23) et incluant ni l'entrée des gaz d'échappement (21a) ni la sortie des gaz d'échappement (21b).

2. Turbocompresseur à volume variable selon la revendication 1, **caractérisé en ce que**
une rainure (21d) est formée au niveau du logement de turbine (21) pour recevoir une partie d'extrémité pointue (23a) de la paroi de séparation (23).

3. Turbocompresseur à volume variable selon la revendication 1 ou 2, **caractérisé en ce que** l'élément de couvercle (29) inclut une configuration approximativement en disque à gradins et une partie périphérique externe de l'élément de couvercle (29) est ajustée dans une partie d'évidement (21c) ménagée au niveau du logement de turbine (21) pour être fixée.

4. Turbocompresseur à volume variable selon l'une quelconque des revendications 1 à 3, **caractérisé en ce que** l'élément de couvercle (29) est formé par moulage par injection de métal.

5. Turbocompresseur à volume variable selon l'une quelconque des revendications 1 à 3, **caractérisé en ce que** l'élément de couvercle (29) est formé par le formage par cire perdue.

6. Turbocompresseur à volume variable selon l'une quelconque des revendications 1 à 5, **caractérisé en ce que** l'élément de couvercle (29) a une configuration en disque à gradins et une partie externe de l'élément de couvercle (29) est fixée au logement de turbine (21).
